# EUROPEAN PATENT SPECIFICATION

(11) **EP 2 304 264 B1**
(45) Date of publication and mention of the grant of the patent: **09.10.2019**
(21) Application number: 09766938.6
(22) Date of filing: 10.06.2009
(51) Int. Cl.: F16D 65/12

(54) **SYSTEM COMPRISING A HUB DEVICE AND A BRAKE DISC**
SYSTEM MIT EINER NABENVORRICHTUNG UND EINER SCHEIBENBREMSE
SYSTÈME COMPRENANT UN DISPOSITIF DE MOYEU ET UN DISQUE DE FREIN

(30) Priority: 19.06.2008 SE 0801453
(43) Date of publication of application: 06.04.2011
(73) Proprietor: Scania CV AB, 151 87 Södertälje (SE)
(72) Inventor: ILG, Torvald, S-122 48 Enskede (SE)
(74) Representative: Scania CV AB
(86) International application number: PCT/SE2009/050703
(87) International publication number: WO 2009/154548

(56) References cited:
- WO-A1-2004/102025
- DE-A1- 10 159 799
- DE-A1- 10 159 799
- DE-U1- 29 823 371
- US-A1- 2003 006 104
- US-A1- 2007 084 685
- US-A1- 2007 084 685
- US-A1- 2008 128 229
- US-B1- 6 467 588
- US-B1- 6 910 556

## Description

### Technical field

The present invention relates to a system comprising a hub device and a brake disc for vehicles according to the preamble of claim 1.

### Background

A wheel suspension for vehicles comprises a non-rotating shaft with a shaft journal and, mounted on the shaft journal, a wheel bearing unit on which a hub device is fitted. A wheel rim with tyre and a brake disc can be fitted to the hub device so that the rim, the tyre and the brake disc rotate about the shaft journal when the vehicle is in motion. When the vehicle is to be braked, brake blocks are pressed against the sides of the brake disc, thereby braking the tyre's rotation and hence also the vehicle. The stability with which the brake disc has to be fitted to the hub device in order to withstand the great forces to which the brake disc is subject during its service life make it difficult to remove the brake disc from the hub device when a worn brake disc has to be replaced by a new one.

To facilitate the removal of the brake disc from the hub device and reduce thermal conduction from the brake disc to the hub device, intermediate elements may be provided between the brake disc and the hub device.

WO 2008/036033 A1 refers to a connection of a brake disc to a hub device whereby the brake disc is provided on its inner peripheral surface with grooves directed radially outwards and the hub device has external ridges for cooperation with said grooves, and intermediate elements for transmission of torque and power between the hub and the brake disc are situated in said grooves on the brake disc when the brake disc is fitted on the hub device.

EP 0 864 053 B1 refers to a connection of a brake disc to a hub whereby the brake disc is provided on its inner peripheral surface with support elements protruding radially inwards, the hub has radially protruding cams on its outer peripheral surface, and intermediate elements for transmission of torque and power between the cams on the hub and the support elements on the brake disc are configured in such a way that the hub's cams engage in the intermediate elements.

DE 101 59 799 A1 refers to a brake disk which has an axially fixed holding part for a friction ring and power transmission surfaces on the holding part and ring. There is at least one sector extending between the power transmission surfaces which locks the friction ring under pretension against the holding part. A fixing element can be pre-fitted to the friction ring or holding part.

### Brief description of the invention

The problem of facilitating the fitting/removal of a brake disc to/from a hub device and reducing thermal conduction from the brake disc to the hub device is solved according to the invention by a system comprising a hub device and a brake disc according to the characterising part of claim 1.

A system comprising a hub device and a brake disc according to claim 1 and having the characteristics that the hub device comprises at least two protruding elements and that at least two intermediate elements for transmission of torque and power between the hub device and the brake disc are adapted to having their one end part protruding into a groove in the brake disc and their other end part protruding into an adjacent groove in the brake disc, which end parts are united by a base portion which is adapted to resting against the brake disc's inner axial side surface when the brake disc is fitted on the hub device, affords the advantage that the intermediate elements can be pre-fitted to the brake disc before the mutual assembly of the brake disc and the hub device, and that the intermediate elements are clamped between the brake disc and the hub device during the mutual assembly operation, thereby achieving rapid and easy assembly while at the same time the intermediate elements are not displaced from their positions on the brake disc. This system also caters for easy removal of the brake disc from the hub device in that the intermediate element prevents the brake disc and the hub device from corroding firmly to one another over a considerable surface area.

### Brief description of the drawings

The invention is explained in more detail below with reference to the attached drawings, in which:
Figure 1 depicts schematically an exploded drawing of a system comprising a hub device and a brake disc according to a first embodiment of the invention,
Figure 2 depicts schematically a partial view of an assembled system according to Figure 1,
Figure 3 depicts schematically a partial view of a brake disc and intermediate elements as seen from the outside of the brake disc,
Figure 4 depicts schematically a partial view of a brake disc and intermediate elements according to Figure 3 as seen from the hub, and
Figure 5 depicts schematically a view of an intermediate element according to the invention.

### Description of preferred embodiments

Similar items in the various drawings are designated by the same reference notations.

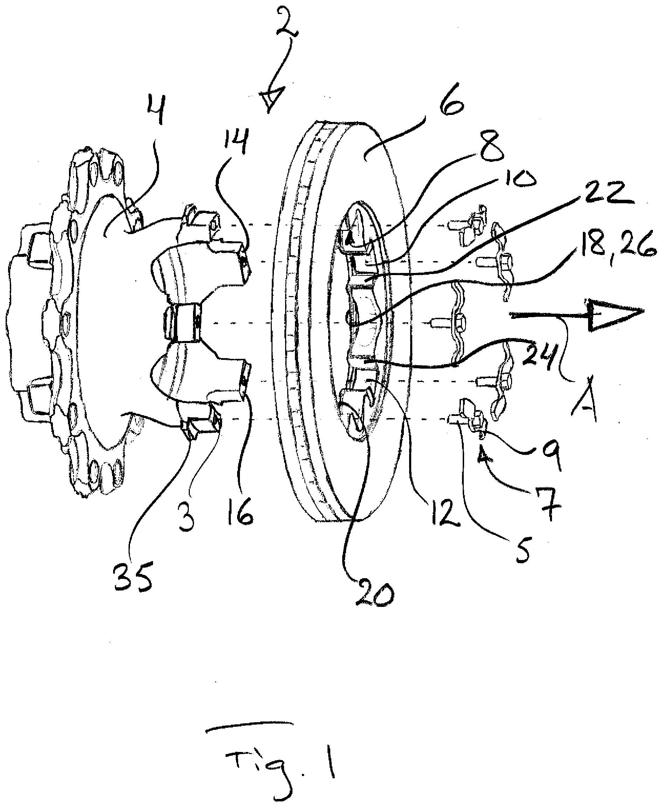

Figure 1 depicts schematically an exploded drawing of a system 2 comprising a hub device 4 and a brake disc 6 according to a first embodiment of the invention. The brake disc 6 is provided on its inner radial peripheral surface 8 with at least two, but preferably more, grooves 10, 12 directed radially outwards and the hub device 4 is provided with at least two, but preferably more, protruding elements 14, 16 adapted to cooperation with said grooves 10, 12 in the brake disc 6. Said protruding elements 14, 16 preferably protrude in the axial direction A of the hub device 4 in order to minimise the space which the hub device occupies in its radial direction, but they may alternatively be adapted to protruding in the radial direction of the hub device 4. The system 2 further comprises at least two, but preferably more, intermediate elements 18, 20 for transmission of torque and power between the hub device 4 and the brake disc 6, said intermediate elements 18, 20 being adapted to partly protruding into said grooves 10, 12 in the brake disc 6 when the brake disc 6 is fitted to the hub device 4 in such a way that an intermediate element 18, 20 has its one end part 22 protruding into a groove 10 and its other end part 24 into an adjacent groove 12, the end parts 22, 24 of the intermediate element also being united by a base portion 26. As illustrated in the drawing, the brake disc 6 is adapted to being locked to the hub device 4 by means of at least one locking unit 7, but preferably a number of locking units 7, each locking unit preferably comprising a locking clamp 9 adapted to holding the brake disc 6 in position against the hub device 4 by the locking clamp being fastened to threaded holes 3 in the hub device 4 by a bolt 5, the threaded holes 3 in the hub device 4 being preferably arranged in the protruding elements 14, 16. The hub device 4 is provided with at least one support element 35 adapted to limiting the movement of the brake disc 6 in the axial direction A of the hub device 4, the support elements 35 being preferably arranged adjacent to the protruding elements 14, 16 and the brake disc 6 abutting against the support elements 35 when the brake disc 6 is fitted on the hub device 4.

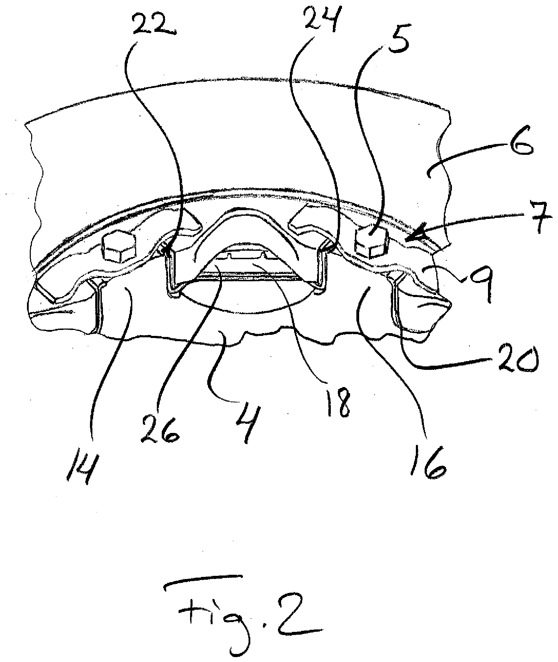

Figure 2 depicts schematically a partial view of an assembled system according to Figure 1 and shows how the brake disc 6 is locked to the hub device 4 by means of at least one locking unit 7, but preferably a number of locking units 7, each locking unit preferably comprising a locking clamp 9 which holds the brake disc 6 in position against the hub device 4 by the locking clamp being fastened to threaded holes in the hub device 4 by a bolt 5, the threaded holes in the hub device 4 being preferably arranged in the protruding elements 14, 16. The drawing also shows two neighbouring intermediate elements 18, 20 and how an intermediate element 18, 20 has its one end part 22 protruding into a groove 10 and its other end part 24 into an adjacent groove 12, the end parts 22, 24 of the intermediate element being also united by a base portion 26.

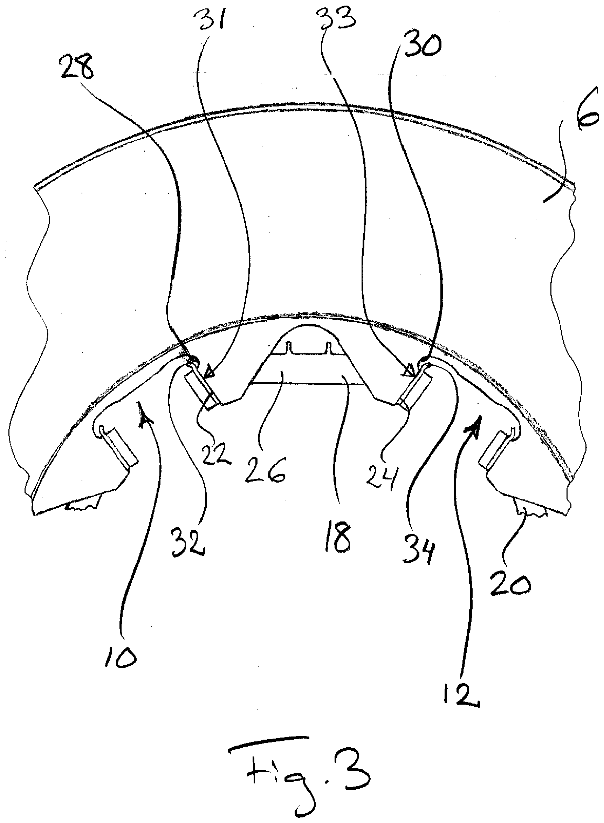

Figure 3 depicts schematically a partial view of a brake disc 6 and intermediate elements 18, 20 as seen from the outside of the brake disc 6. It shows that the intermediate elements 18, 20 can be pre-fitted on the brake disc 6 before the brake disc 6 is fitted on the hub device, which is of great advantage in that the time required for fitting the brake disc 6 on the hub device can thus be substantially shortened. To prevent the intermediate elements 18, 20 from falling off the brake disc 6 after they have been pre-fitted on the brake disc 6 but before the brake disc 6 has been fitted on the hub device 4, the brake disc 6 and the intermediate elements 18, 20 are preferably provided with locking means 28, 30 and 32, 34 respectively, which locking means 28, 30, 32, 34 are adapted to cooperating with one another to fasten the intermediate elements 18, 20 to the brake disc 6, the aforesaid grooves 10, 12 in the brake disc 6 being therefore preferably provided at their side edges 31, 33 with recesses 28, 30 in which snap means 32, 34 arranged on the intermediate elements 18, 20 are adapted to engaging in order to fasten the intermediate elements 18, 20 to the brake disc 6. Alternatively, the intermediate elements 18, 20 may be slightly bent, e.g. in their base portion 26, to make it possible for the intermediate elements 18, 20 to be clamped firmly to the brake disc 6 with a certain preloading.

The intermediate elements 18, 20 are adapted to preferably being pushed onto the brake disc 6 from the inner radial peripheral surface 8 of the brake disc 6 and radially outwards until said snap means 32, 34 come into engagement with said recesses 28, 30, thereby locking the intermediate elements 18, 20 firmly to the brake disc 6. As illustrated in the drawing, the intermediate element 18, 20 has its one end part 22 protruding into a groove 10 in the brake disc 6 and its other end part 24 into an adjacent groove 12 in the brake disc 6, the end parts 22, 24 of the intermediate elements 18, 20 also being united by a base portion 26. Said snap means 32, 34 are preferably each arranged on their respective end part 22, 24 of the intermediate element 18, 20.

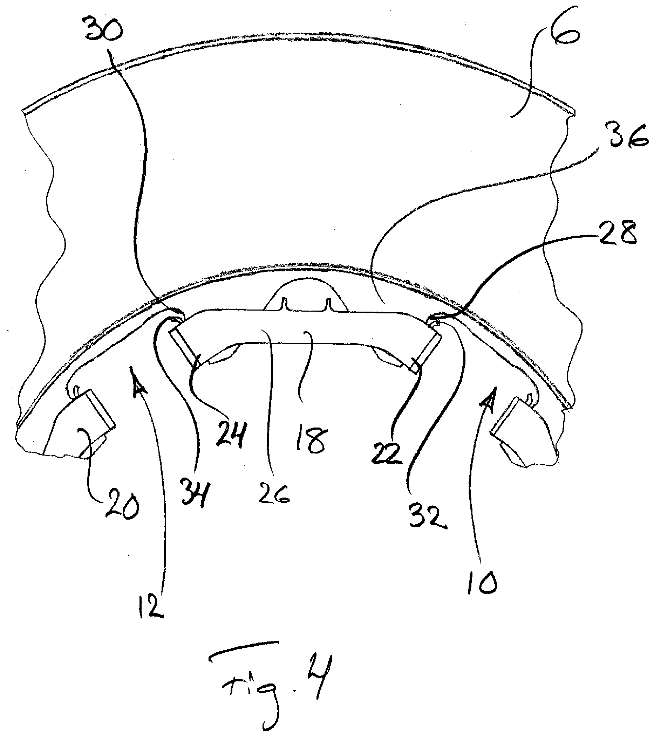

Figure 4 depicts schematically a partial view of a brake disc 6 and intermediate elements 18, 20 according to Figure 3 as seen from the hub. It shows the aforesaid grooves 10, 12 in the brake disc 6, and snap means 32, 34 arranged on the respective end parts 22, 24 of the intermediate element 18, 20. The intermediate elements 18, 20 being provided with the aforesaid snap means 32, 34 and the brake disc 6 being provided with the aforesaid grooves 28, 30 results in the intermediate elements 18, 20 being held in place in the radial direction of the brake disc 6 when the brake disc 6 is fitted on the hub device. Moreover, the intermediate elements 18, 20 being provided with a base portion 26 adapted to resting against the inner axial side surface 36 of the brake disc 6 when the brake disc 6 is fitted on the hub device prevents the hub device's aforesaid protruding elements from pushing the intermediate elements 18, 20 away from the brake disc 6 during the fitting operation and has instead the effect of further fixing these intermediate elements 18, 20 in position by their being clamped between the brake disc 6 and the hub device.

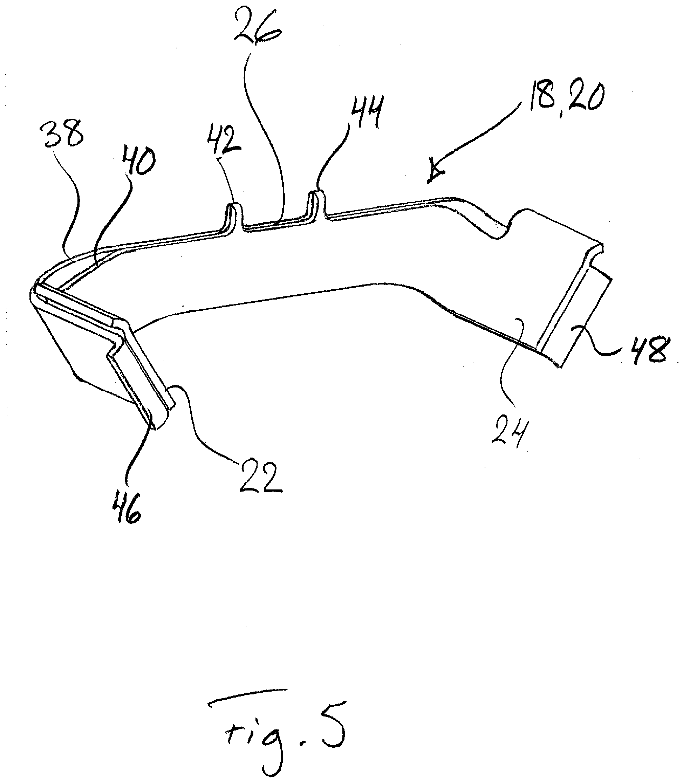

Figure 5 depicts schematically a view of an intermediate element 18, 20 according to the invention, in which the intermediate element 18 comprises two end parts 22, 24, and the end parts 22, 24 of the intermediate element 18, 20 are also united by a base portion 26. The intermediate element 18, 20 comprises more than one layer of material, and these layers are adapted to being held together at least until the brake disc has been slid onto the hub device. The intermediate element 18, 20 depicted in the drawing comprises two layers of material 38, 40 which are separated from one another except at two holding-together means 42, 44 which are adapted to being broken off when the brake disc is removed from the hub device. The intermediate elements 18, 20 depicted in the drawing may for example be made of a single piece of sheetmetal bent to the layered configuration depicted in the drawing. Surface coatings to prevent corrosion may be provided between the layers. It is advantageous for the intermediate element 18, 20 to comprise more than one layer, since this further facilitates the removal of the brake disc from the hub device. Any rusting of the intermediate element 18, 20 to the brake disc 6 or to the hub device can thus be "directed" to whichever layer 38, 40 of the intermediate element 18, 20 is adjacent to the brake disc 6 or the hub device respectively, so that there is no adhesion between said layers 38, 40 at the time of removal of the brake disc from the hub device.

The intermediate element 18, 20 may be provided at its respective end parts 22, 24 with support means 46, 48 which, when the brake disc 6 is fitted on the hub device, abut against the hub device's aforesaid protruding elements on their radial outside, thereby further fixing these intermediate elements 18, 20 in position by their being clamped firmly between the brake disc 6 and the hub device.

It is usual for the brake disc 6 to be made of, for example, grey iron and the hub device 4 of, for example, nodular iron, but it is also possible to use materials other than cast iron, e.g. other metals or ceramics, so long as the material can maintain its shape despite being subject to great forces and torque and to dirt, oil, centrifugal force and high and low temperatures, i.e. a material which tolerates the environment to which a hub device 4 and a brake disc 6 are respectively subject in both summer and winter. The hub device 4 and the brake disc 6 may be made by, inter alia, pressing, casting or machining from a blank. The intermediate element 18, 20 is made of material which can maintain its shape despite being subject to great forces and torque and to dirt, oil, centrifugal force and high and low temperatures, i.e. a material which tolerates the environment to which a hub device 4 and a brake disc 6 are respectively subject in both summer and winter, e.g. metal.

## Claims

1. A system comprising a hub device (4) and a brake disc (6) for vehicles, in which the brake disc (6) is provided at its inner radial peripheral surface (8) with at least two grooves (10, 12) directed radially outwards, the hub device (4) is provided with at least two protruding elements (14, 16) adapted to cooperation with said grooves (10, 12) in the brake disc (6), and the system (2) further comprises at least two intermediate elements (18, 20) for transmission of torque and power between the hub device (4) and the brake disc (6), wherein said intermediate elements (18, 20) are adapted to partly protruding into said grooves (10, 12) in the brake disc (6) in such a way that an intermediate element (18, 20) has its one end part (22) protruding into a groove (10) and its other end part (24) into an adjacent groove (12), and the end parts (22, 24) of the intermediate element are also united by a base portion (26) which is adapted to resting against the inner axial side surface (36) of the brake disc (6) during the fitting of the brake disc (6) on the hub device (4) **characterised in that** the intermediate elements (18, 20) comprise two or more layers of material adapted to being held together at least until the brake disc (6) has been slid onto the hub device (4), and **in that** the layers of material (38, 40) of the intermediate elements (18, 20) are adapted to being held together by holding-together means (42, 44) which are adapted to being broken off when the brake disc (6) is removed from the hub device (4).

2. A system according to claim 1, **characterised in that** said protruding elements (14, 16) protrude in the axial direction (A) of the hub device (4).

3. A system according to claim 1, **characterised in that** said protruding elements (14, 16) protrude in the radial direction of the hub device (4).

4. A system according to any one of the foregoing claims, **characterised in that** locking means (28, 30) of the brake disc (6) and locking means (32, 34) of the intermediate elements (18, 20) are adapted to cooperating in order to fasten the intermediate elements (18, 20) to the brake disc (6).

5. A system according to claim 4, **characterised in that** the grooves (10, 12) in the brake disc (6) are provided at their side edges (31, 33) with recesses (28, 30) in which snap means (32, 34) arranged on the intermediate elements (18, 20) are adapted to engaging in order to fasten the intermediate elements (18, 20) to the brake disc (6).

6. A system according to claim 5, **characterised in that** the snap means (32, 34) are each arranged on their respective end part (22, 24) of the intermediate elements (18, 20).

7. A system according to any one of the foregoing claims, **characterised in that** surface coatings which prevent corrosion are arranged between the layers of material (38, 40).

8. A system according to any one of the foregoing claims, **characterised in that** the intermediate elements (18, 20) are provided at their respective end parts (22, 24) with support means (46, 48) which, when the brake disc (6) is fitted on the hub device (4), are adapted to abutting against the radial outside of the aforesaid protruding elements (14, 16) of the hub device (4), thereby further fixing the intermediate elements (18, 20) in position by their being clamped firmly between the brake disc (6) and the hub device (4).

## Patentansprüche

1. System mit einer Nabenanordnung (4) und einer Bremsscheibe (6) für Fahrzeuge, bei der die Bremsscheibe (6) an ihrer inneren radialen Umfangsfläche (8) mit wenigstens zwei radial auswärts gerichteten Nuten (10, 12) versehen ist, wobei die Nabenanordnung (4) mit wenigstens zwei hervorstehenden Elementen (14, 16) versehen ist, die zum Zusammenwirken mit den Nuten (10, 12) in der Bremsscheibe (6) eingerichtet sind, und wobei das System (2) ferner wenigstens zwei Zwischenelemente (18, 20) zur Übertragung von Drehmoment und Leistung zwischen der Nabenanordnung (4) und der Bremsscheibe (6) aufweist, wobei die Zwischenelemente (18, 20) dazu eingerichtet sind, teilweise in die Nuten (10, 12) in der Bremsscheibe (6) solchermaßen zu ragen, dass ein Zwischenelement (18, 20) mit seinem einen Endteil (22) in eine Nut (10) ragt und mit seinem anderen Endteil (24) in eine benachbarte Nut (12), wobei die Endteile (22, 24) der Zwischenelemente auch durch ein Basisteil (26) verbunden sind, welches dazu eingerichtet ist, an der inneren axialen Seitenfläche (36) der Bremsscheibe (6) während der Montage der Bremsscheibe (6) an der Nabenanordnung (4) anzuliegen,
**dadurch gekennzeichnet, dass** die Zwischenelemente (18, 20) zwei oder mehr Materialschichten umfassen, die dazu eingerichtet sind, zusammengehalten zu werden zumindest bis die Bremsscheibe (6) auf die Nabenanordnung (4) geschoben worden ist, und dass die Materialschichten (38, 40) der Zwischenelemente (18, 20) dazu eingerichtet sind, durch Zusammenhaltmittel (42, 44) zusammengehalten zu werden, welche dazu eingerichtet sind, abgebrochen zu werden, wenn die Bremsscheibe (6) von der Nabenanordnung (4) abgenommen wird.

2. System nach Anspruch 1,
**dadurch gekennzeichnet, dass** die hervorstehenden Elemente (14, 16) in der Axialrichtung (A) der Nabenanordnung (4) hervorstehen.

3. System nach Anspruch 1,
**dadurch gekennzeichnet, dass** die hervorstehenden Elemente (14, 16) in der Radialrichtung der Nabenanordnung (4) hervorstehen.

4. System nach einem der vorhergehenden Ansprüche,
**dadurch gekennzeichnet, dass** Arretiermittel (28, 30) der Bremsscheibe (6) und Arretiermittel (32, 34) der Zwischenelemente (18, 20) zusammenzuwirken vermögen, um die Zwischenelemente (18, 20) an der Bremsscheibe (6) zu befestigen.

5. System nach Anspruch 4,
**dadurch gekennzeichnet, dass** die Nuten (10, 12) in der Bremsscheibe (6) an ihren Seitenrändern (31, 33) mit Ausnehmungen (28, 30) versehen sind, in die an den Zwischenelementen (18, 20) angeordnete Rasteinrichtungen (32, 34) einzugreifen vermögen, um die Zwischenelemente (18, 20) an der Bremsscheibe (6) zu befestigen.

6. System nach Anspruch 5,
**dadurch gekennzeichnet, dass** die Rasteinrichtungen (32, 34) jeweils auf dem zugehörigen Endteil (22, 24) der Zwischenelemente (18, 20) angeordnet sind.

7. System nach einem der vorhergehenden Ansprüche,
**dadurch gekennzeichnet, dass** Oberflächenbeschichtungen, die eine Korrosion verhindern, zwischen den Materiallagen (38, 40) angeordnet sind.

8. System nach einem der vorhergehenden Ansprüche,
**dadurch gekennzeichnet, dass** die Zwischenelemente (18, 20) an ihren zugehörigen Endteilen (22, 24) mit Abstützmitteln (46, 48) versehen sind, die dazu eingerichtet sind, an der radialen Außenseite der genannten hervorstehenden Elemente (14, 16) der Nabenanordnung (4) anzuliegen, wenn die Bremsscheibe (6) an der Nabenanordnung (4) montiert wird, um dadurch die Zwischenelemente (18, 20) ferner in Position zu fixieren, in dem sie fest zwischen der Bremsscheibe (6) und der Nabenanordnung (4) eingeklemmt werden.

## Revendications

1. Système comprenant un dispositif de moyeu (4) et un disque de frein (6) pour des véhicules, dans lequel le disque de frein (6) est pourvu dans sa surface périphérique radiale interne (8) d'au moins deux rainures (10, 12) dirigées radialement vers l'extérieur, le dispositif de moyeu (4) est pourvu d'au moins deux éléments en saillie (14, 16) adaptés pour une coopération avec lesdites rainures (10, 12) dans le disque de frein (6), et le système (2) comprend en outre au moins deux éléments intermédiaires (18, 20) pour la transmission du couple et de la puissance entre le dispositif de moyeu (4) et le disque de frein (6), dans lequel lesdits éléments intermédiaires (18, 20) sont adaptés pour faire saillie partiellement dans lesdites rainures (10, 12) dans le disque de frein (6) de manière à ce qu'un élément intermédiaire (18, 20) a une de ses parties d'extrémité (22) faisant saillie dans une rainure (10) et son autre pièce d'extrémité (24) dans une rainure adjacente (12), et les parties d'extrémité (22, 24) de l'élément intermédiaire sont également unies par une partie de base (26) qui est adaptée pour s'appuyer contre la surface latérale axiale intérieure (36) du disque de frein (6) lors de l'ajustement du disque de frein (6) sur le dispositif de moyeu (4) **caractérisé en ce que** les éléments intermédiaires (18, 20) comprennent deux ou plusieurs couches de matériau adaptées pour être maintenues ensemble au moins jusqu'à ce que le disque de frein (6) ait été glissé sur le dispositif de moyeu (4), et **en ce que** les couches de matériau (38, 40) des éléments intermédiaires (18, 20) sont adaptées pour être maintenues ensemble par des moyens de maintien ensemble (42, 44) qui sont adaptés pour être cassés lorsque le disque de frein (6) est retiré du dispositif de moyeu (4).

2. Système selon la revendication 1, **caractérisé en ce que** lesdits éléments en saillie (14, 16) font saillie dans la direction axiale (A) du dispositif de moyeu (4).

3. Système selon la revendication 1, **caractérisé en ce que** lesdits éléments en saillie (14, 16) font saillie dans la direction radiale du dispositif de moyeu (4).

4. Système selon l'une quelconque des revendications précédentes, **caractérisé en ce que** des moyens de verrouillage (28, 30) du disque de frein (6) et des moyens de verrouillage (32, 34) des éléments intermédiaires (18, 20) sont adaptés à la coopération afin de fixer les éléments intermédiaires (18, 20) au disque de frein (6).

5. Système selon la revendication 4, **caractérisé en ce que** les rainures (10, 12) dans le disque de frein (6) sont fournies sur leurs bords latéraux (31, 33) avec des évidements (28, 30) dans lesquels les moyens de pression (32, 34) agencés sur les éléments intermédiaires (18, 20) sont adaptés à l'engagement afin de fixer les éléments intermédiaires (18, 20) au disque de frein (6).

6. Système selon la revendication 5, **caractérisé en ce que** les moyens de pression (32, 34) sont chacun agencés sur leur partie d'extrémité respective (22, 24) des éléments intermédiaires (18, 20).

7. Système selon l'une quelconque des revendications précédentes, **caractérisé en ce que** les revêtements de surface qui empêchent la corrosion sont agencés entre les couches de matériau (38, 40) .

8. Système selon l'une quelconque des revendications précédentes, **caractérisé en ce que** les éléments intermédiaires (18, 20) sont fournis à leurs pièces d'extrémité respectives (22, 24) avec des moyens de support (46, 48) qui, lorsque le disque de frein (6) est fixé sur le dispositif de moyeu (4), sont adaptés pour venir en butée contre l'extérieur radial desdits éléments en saillie (14, 16) du dispositif de moyeu (4), en fixant ainsi davantage les éléments intermédiaires (18, 20) en position en les serrant fermement entre le disque de frein (6) et le dispositif de moyeu (4).
